Europäisches Patentamt

(19) European Patent Office

Office européen des brevets

(11) Publication number: **0 131 954**
**A2**

# (12) EUROPEAN PATENT APPLICATION

(21) Application number: **84108371.0**

(22) Date of filing: **17.07.84**

(51) Int. Cl.⁴: **B 60 C 9/00**

(30) Priority: **19.07.83 JP 131731/83**
**06.12.83 JP 231156/83**
**15.05.84 JP 98320/84**

(43) Date of publication of application:
**23.01.85 Bulletin 85/4**

(84) Designated Contracting States:
**CH DE FR GB IT LI NL**

(71) Applicant: **SUMITOMO RUBBER INDUSTRIES LIMITED**
**No. 1-1, Tsutsui-cho 1-chome**
**Chuo-ku Kobe-shi Hyogo-ken(JP)**

(72) Inventor: **Sowa, Nobuhiro**
**29-20, Kitakibogaoka**
**Kawachinagano-shi Osaka-fu(JP)**

(72) Inventor: **Nakayasu, Rituo**
**39-4-303, Izumidai 3-chome Kita-ku**
**Kobe-shi Hyogo-ken(JP)**

(74) Representative: **Türk, Dietmar, Dr. rer. nat. et al,**
**Redies, Redies, Türk & Gille Patentanwälte**
**Brucknerstrasse 20**
**D-4000 Düsseldorf 13(DE)**

(54) Pneumatic tire reinforced with fabric.

(57) A pneumatic tire excellent in uniformity and durability and applicable to cars, light trucks, trucks, light vehicles such as motor bicycles or bicycles is disclosed.

The tire contains a knitting fabric as a reinforcement, which is formed by arranging warps parallel one another and twining a knitting yarn of a fine fiber around the warps to keep each space between the warps constant.

The knitting fabric is used as a carcass, a belt layer, a bead filler or a chafer of the various kinds of tires, and as a carcass of a radial tire.

Fig. 1

10

12  11  13  11    11

PNEUMATIC TIRE REINFORCED WITH FABRIC

The present invention relates to a pneumatic tire containing a knitting fabric as a reinforcement.

Hitherto, for a carcass of a pneumatic tire there has been generally employed a cord fabric which is woven of warps of a tire cord arranged as a main reinforcement and finer wefts than the warps. The wefts are roughly woven enough to maintain an arrangement of the warps and spaces between the warps.

Such a cord fabric is prepared as follows: the warps are arranged and shed alternately, e.g. when a warp is shed like upward, downward and upward, an adjacent warp is shed like downward, upward and downward. The weft is beaten through the series of the sheddings one after another by means of a shuttle to give the cord fabric. In manufacturing a bias tire using the thus prepared cord fabric, the following process is generally employed, e.g. the cord fabrics are cut at an angle of 20 to 70° with respect to the direction of the warp arrangement included in the fabric. The cut fabrics are welded successively to give a ply. A cylindrical carcass is fabricated on a drum by the use of two plies at least in a manner that the warps in the ply cross the warps in the adjacent ply. Then, the carcass is formed into a troidal tire.

With respect to the carcass prepared by the process described above, there are occurred the following problems. First, since the warps are easy to move because of an insufficient fixing of the warps to the wefts in the above-mentioned process and the each space between the cords is in lack of uniformity, durability of the obtained tire is lowered.

Second, the warps consisting in the cord fabric have a tendency to wave owing to their structual shape causing the cord fabric rugged. Therefore, the thickness of the fabric is increased apparently so that for the purpose of covering the whole fabric, there is a necessity that the topping rubber is applied to the fabric in a large amount resulting in a thick rubber layer to inhibit a contact between the cords in the fabric. It is disadvantageous from the viewpoint of a weight of tire.

Third, since the cord fabric is prepared by a weaving attended with shedding the warps, there is a limit with respect to the productivity. Further, it is necessary to choose the materials for the warps and the wefts so that they do not slip each other, and a long staple cannot be preferably used for the weft.

The object of the present invention is to provide a pneumatic tire or a low pressure tire which eliminates the above-mentioned problems, and is excellent in uniformity and durability and applicable to cars, light trucks, trucks, light vehicles such as motor bicycles or bicycles and the like.

According to the present invention, there is provided a pneumatic tire containing a knitting fabric as a reinforcement, wherein the knitting fabric is formed by arranging warps pararrel one another and twining a knitting yarn of a fine fiber around the warps to keep each space between the warps constant.

Fig. 1 is a plan view of an embodiment of the knitting fabric usable to a pneumatic tire of the present invention;

Fig. 2 and Fig. 3 are a front view and rear view of the other embodiment of the knitting fabric, respectively;

Fig. 4 and Fig. 5 are a front view and rear view of the knitting fabric which also contains the wefts, respectively;

Fig. 6 is a plan view of the other embodiment of the knitting fabric containing both warps and wefts;

Fig. 7 is a cross section of a bias tire containing the knitting fabric as a carcass;

Fig. 8 is a cross section of a radial tire containing the knitting fabric as a carcass;

Fig. 9 is a cross section of the tire to explain the feature of the tire; and

Fig. 9a and Fig. 9b are partially enlarged views of Fig. 9 showing the distances A, B and C, respectively.

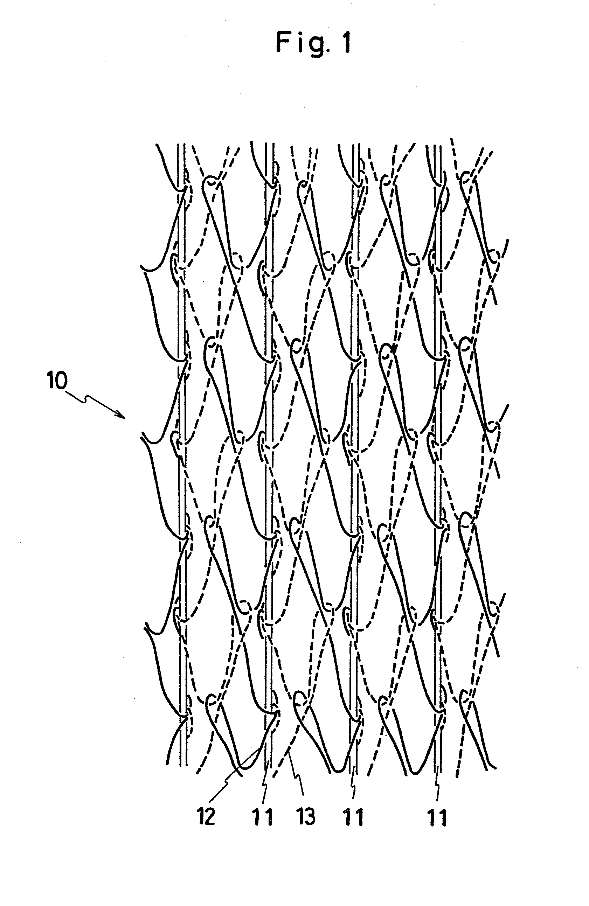

Referring to Fig. 1, the knitting fabric 10 employable to a pneumatic tire of the present invention is formed by arranging the warps 11 pararrel one another and twining a plurality of a knitting yarn 12, 13 of a fine fiber around the warps in a longitudinal direction of the warps to give an integrated product. The knitting fabric can be formed by a conventional knitting method such as a warp knitting method or a weft knitting method, and a raschel knitting machine can be used in the weaving.

For a material of the warp, there can be used an organic fiber such as a fiber of polyamide, polyester, rayon or aromatic polyamide, an inorganic fiber such as steel fiber or glass fiber, or other various materials.

According to the present invention, any fiber can be used for the knitting yarn as long as it is sufficiently durable under ordinary conditions at a time of adhesion treatment and heat treatment in the process for making tires, preferable it is able to bond to the rubber after the treatment.

The knitting fabric formed as described above is subjected to adhesion treatment and heat treatment and then treated with topping rubber, whereby the knitting fabric is laid under the rubber to form a reinforcement.

Typical examples of the knitting fabric according to the present invention are shown in Table 1.

<center>Table 1</center>

| | Warp | | | Knitting yarn | |
|---|---|---|---|---|---|
| | material | fineness | cord embedding density | material | fineness |
| Radial tire for cars | | | | | |
| carcass (mono ply)...... | polyester | 1500 d/2 | 34* | polyester | 30 d |
| carcass (2 plies)....... | polyester | 1000 d/2 | 33* | polyester | 30 d |
| carcass (mono ply)...... | polyester | 1000 d/2 | 40* | polyester | 30 d |
| | | | | | |
| Bias tire for auto bicycles | | | | | |
| carcass................. | polyamide | 840 d/2 | 30 to 55* | polyamide | 30 d |
| carcass................. | polyamide | 1260 d/2 | 30 to 55* | polyamide | 30 d |
| carcass................. | polyamide | 1890 d/2 | 30 to 55* | polyamide | 30 d |
| | | | | | |
| Radial tire for cars | | | | | |
| bead filler............. | polyamide | 840 d/2 | 30** | polyamide | 30 d |
| bead filler............. | aramid | 1500 d/2 | 35** | polyester | 30 d |

<div align="right">- continued -</div>

| | Warp | | | Knitting yarn | |
|---|---|---|---|---|---|
| | material | fineness | cord embedding density | material | fineness |
| Radial tire for cars | | | | | |
| chafer.................... | polyamide (multi-filaments) | 840 d x 840 d | 30 x 30 | polyamide | 30 d |
| chafer................... | polyamide (mono-filament) | 420 d x 420 d | 45 x 45 | polyamide | 30 d |

(*): cord embedding density of the crown portion of tire (per 5 cm)

(**): cord embedding density of the middle portion of bead filler (per 5 cm)

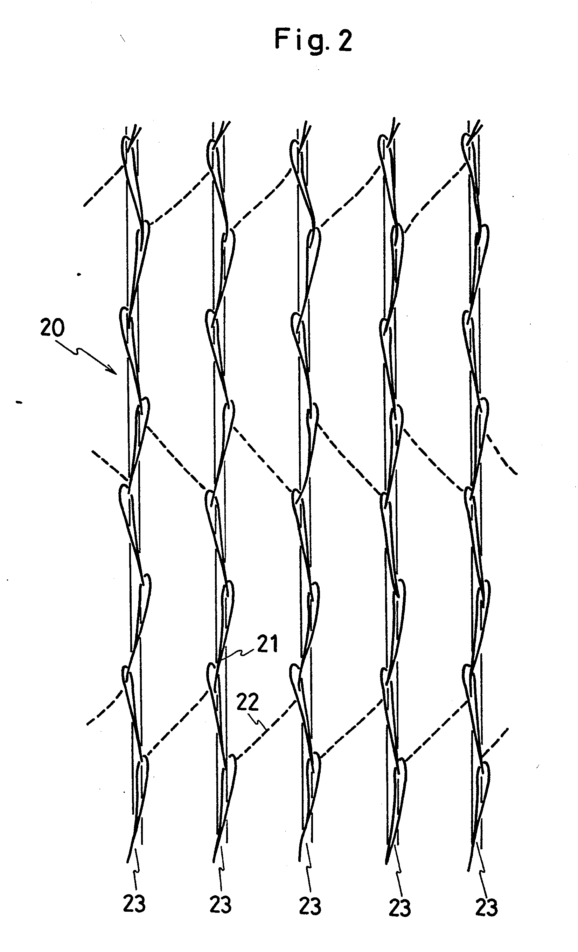

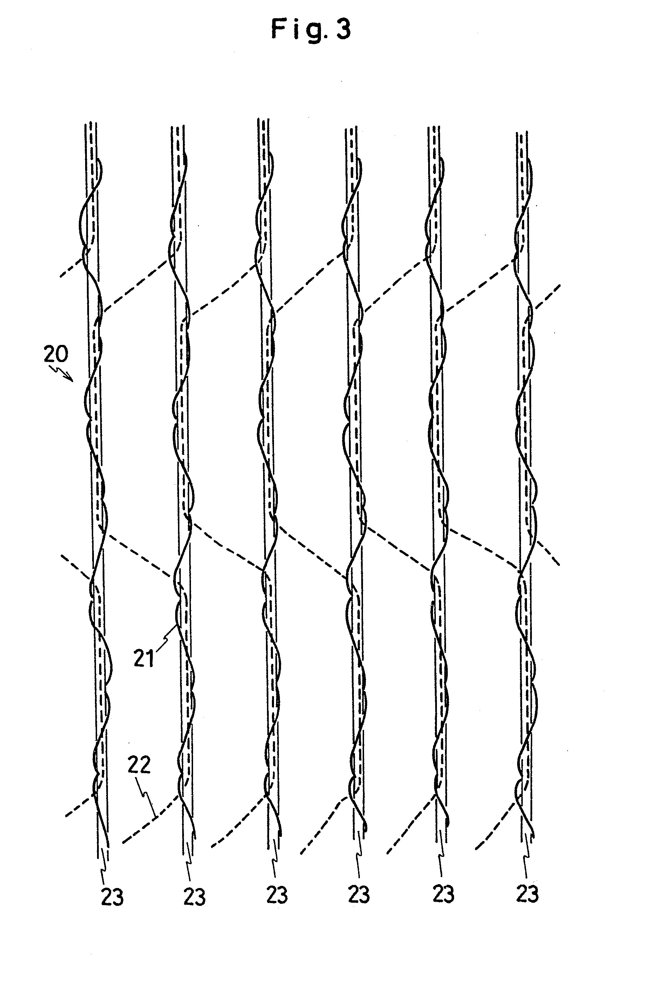

Referring to Fig. 2 and Fig. 3, the knitting fabric 20 is formed in the same manner as described for an embodiment of Fig. 1 except that the knitting yarns 21, 22 are sparsely twined around the warps 23. Such a knitting fabric has a large elongation, for instance, an elongation not less than 30 % with respect to the breadth, e.g. at a right angle to the longitudinal direction of the warps, and during the processes such as topping and cutting the knitting fabric, each space between the warps is kept constant. Expecially when the knitting fabric shown in Fig. 2 and Fig. 3 is applied to a carcass, a made-up tire is excellent in uniformity and durability, and has a smooth surface because the warps are expanded keeping each space between them constant through the process of forming a carcass ply and making it troidal.

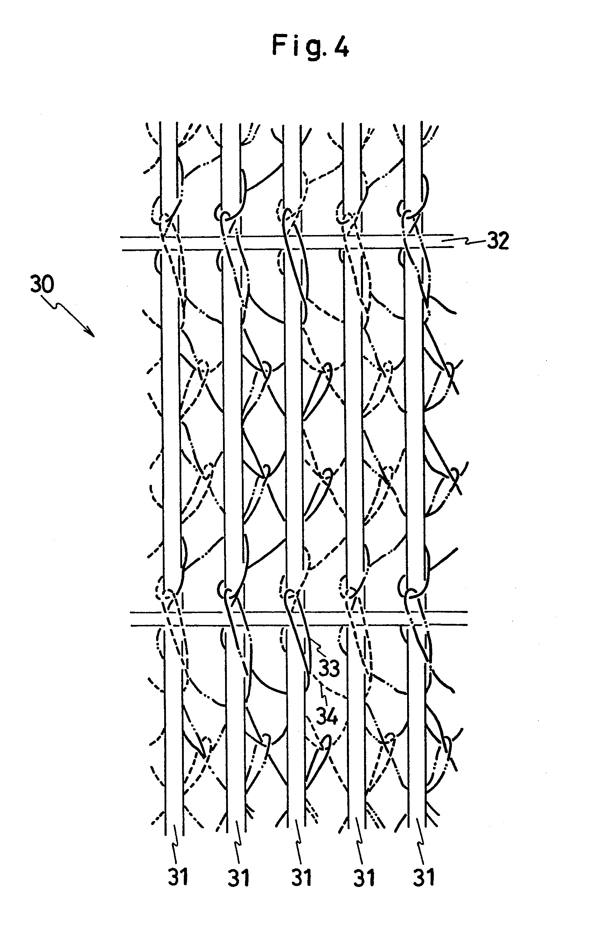

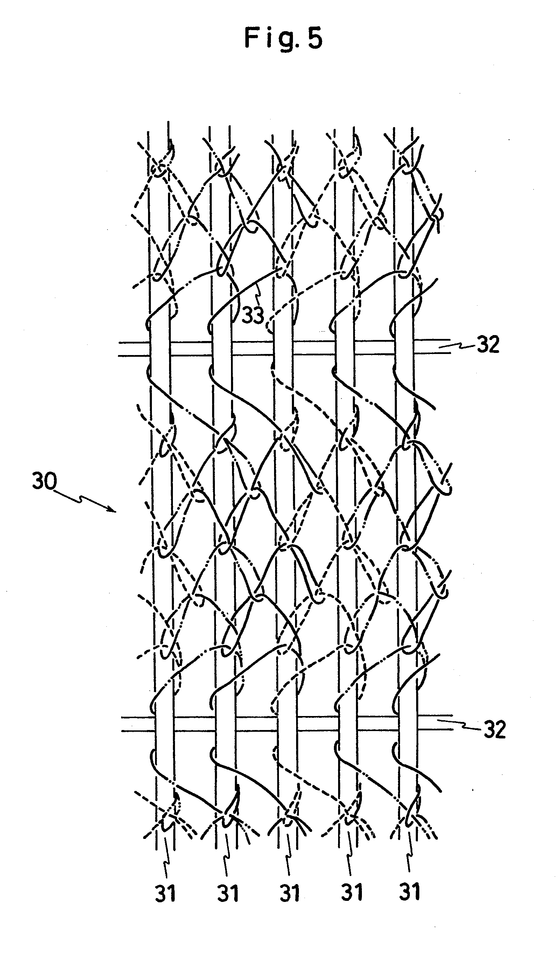

Referring to Fig. 4 and Fig. 5, the knitting fabric 30 is formed by arranging the warps 31 pararrel one another, setting the wefts 32 roughly on the warps to cross the warps at almost right angles without weaving and twining a plurality of a knitting yarn 33, 34 of a fine fiber around the warps and wefts in a longitudinal direction of the warps to fix the wefts to the warps and give an intergrated product. Such a knitting fabric can also be formed by a conventional knitting method such as a warp knitting method or a weft knitting method, and a raschel knitting machine can also be preferably used in the weaving.

For a material of the warp usable in the knitting fabric shown in Fig. 4 and Fig. 5, there can also be employed an organic fiber such as a fiber of polyamide, polyester, rayon or aromatic polyamide, an inorganic fiber such as steel fiber or glass fiber, or other various materials.

According to the present invention, the wefts usable in the knitting fabric are the wefts usable in a conventional cord fabric. With respect to the tire of the invention, it is not necessary to choose a specific material for the wefts so that the wefts hardly slip or move. There can be used any known wefts as long as they are so strong not to break under the tensions during bonding treatment and other processes of making tires till the rubber lining process. The weft, for example, having a tension not less than 100 g/d after the adhesion treatment is completed is preferably used. Further, a long staple, which cannot be used in the plain weaving because the weft slips on it, is able to be used in the present invention.

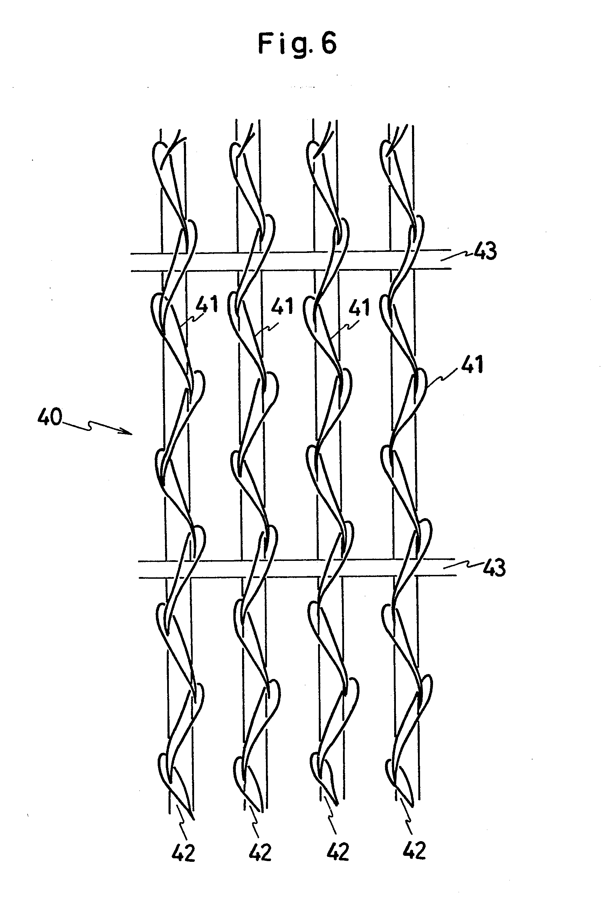

Referring to Fig. 6, the knitting fabric 40 is formed in the same manner as described for an embodiment of Fig. 4 and Fig. 5 except that the knitting yarns 41 are sparsely twined around the warps 42 and wefts 43. In case of the embodiment shown in Fig. 4 and Fig. 5, a knitting yarn is twined around a plurality of the warps to form a mesh or net. On the contrary, a knitting yarn is twined along one warp in case of the embodiment shown in Fig. 6.

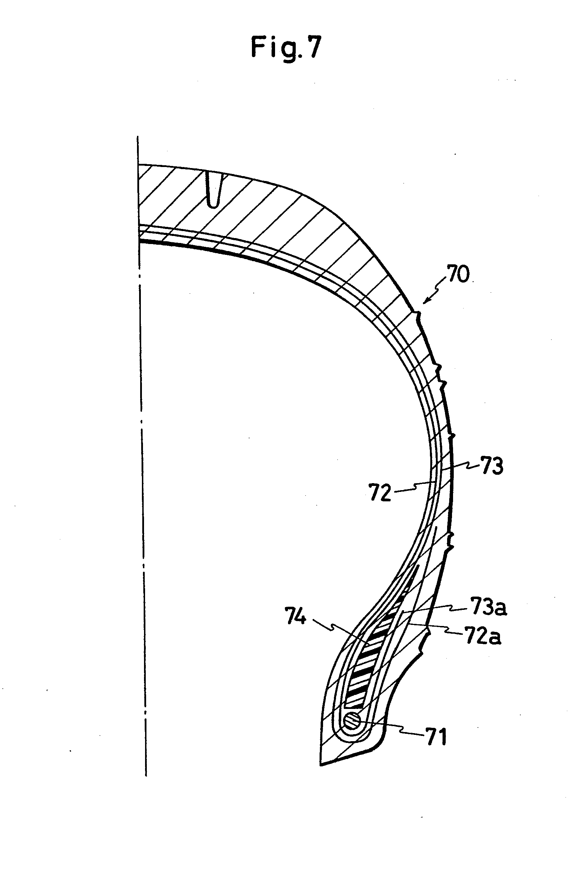

Fig. 7 shows the right half of a cross section of a bias tire, in which the knitting fabric is applied as a carcass ply. In the bias tire 70, are arranged and laid a pair of a bead core 71, two sheets of a carcass ply 72, 73 of which the fringes are turned about the bead core from the inside to the outside of the tire, and a bead apex 74 of high hardness, for example, JIS hardness of $65^{\circ}$ to $95^{\circ}$ between the carcass plies and the turned portions 72a, 73a, where the carcass ply is not a conventional cord fabric but the knitting fabric according to the invention.

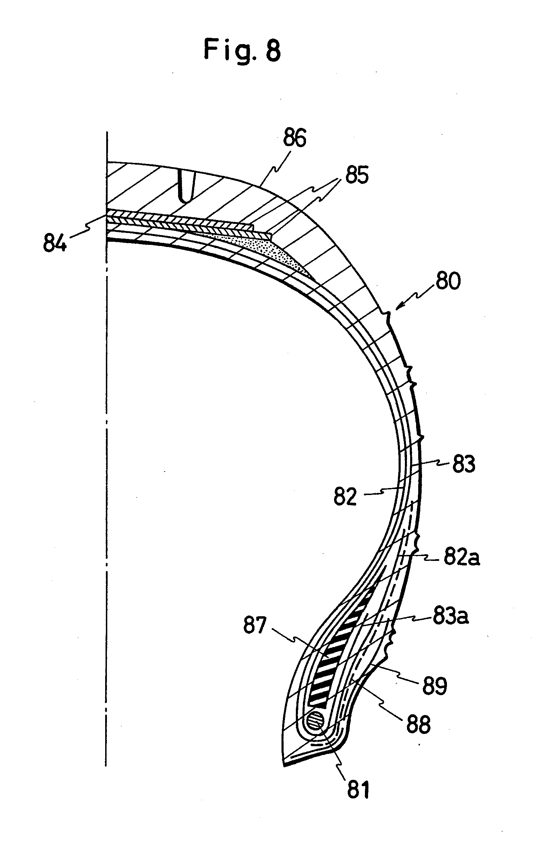

Fig. 8 shows the right half of a cross section of a radial tire, in which the knitting fabric is applied as a carcass ply. In the radial tire 80, are arranged and laid a pair of a bead core 81, two sheets of a troidal carcass 82, 83 of which the fringes are turned about the bead core from the inside to the outside of the tire to engage with the bead core, a belt layer 84 consisting of the tire cords 85 provided on the outside surface of a crown portion of the carcass at a slight angle along the circumference of the tire, a tread 86 provided on the outside of the belt layer 84, a bead apex 87 of relatively high hardness between the carcass plies and the turned portions 82a, 83a extending from the bead core 81 toward a side wall of the tire, a chafer 88 provided on the outside of the turned portion of the carcass, and a bead filler 89 provided on the chafer, where the carcass ply is not a conventional cord fabric but the knitting fabric according to the invention.

According to the present invention, as described above, any fiber can be used for the knitting yarn. Typical examples of such a fiber are, for instance, a filament of an organic fiber such as a fiber of nylon-6, nylon-66 or polyester and the like, having a fineness of 5 to 80 denier in case of applied to a radial tire, or 5 to 50 denier in case of applied to any other tire. When the fineness is not more than 5 denier in both cases, the warps, and the wefts, if any, cannot be sufficiently fixed. On the other hand, when the fineness is not less than 80 denier in a radial tire, or 50 denier in a bias tire, the ply gage increases as a result of increase in thickness of the knitting fabric disadvantageously from the viewpoint of making a tire lighter, and further, the durability decreases because of abrasion between the warps and the wefts, if any.

The knitting fabric according to the present invention is suitably used for a reinforcement of the various kinds of tires such as a carcass, a belt layer, a bead filler or a chafer, and a carcass of a radial tire for cars or heavy load cars in place of a conventionally used cord fabric or plain fabric.

A pneumatic tire of the present invention has the following advantages:

(1) Because the knitting fabric is not woven, the productivity is improved, and the shrinkage of the warps is eliminated, whereby a cost of the materials is lowered.

(2) Because the warps of the knitting fabric are fixed with the knitting yarn maintaining an elasticity of expansion and contraction, the uniformity and the durability of the tire are advanced or improved as a result of the uniformity of the each space between the cords.

(3) In case of containing the wefts, because the warps and wefts of the knitting fabric are fixed with a knitting yarn, the uniformity and the durability of the tire are advanced or improved as a result of the uniformity of the each space between the cords while processing and forming the carcass plies.

(4) In case of containing the wefts, because the warps are not woven with the wefts, the waves as seen in a conventional cord fabric are eliminated to give a ply having a small and uniform thickness, and therefore a pneumatic tire of light weight, excellent in uniformity is advantageously produced. .

(5) In case of containing the wefts, because the warps and wefts of the knitting fabric are fixed with a knitting yarn, a long staple can be used for the weft, and the wefts are not necessary to be set crowded on the warps, whereby the wefts are made lighter and a cost of processing the wefts are lowered to give a lighter tire.

The present invention is more specifically described and explained by means of the foloowing Examples. It is to be understood that the present invention is not limited to the Examples, and various changes and modifications may be made in the invention without departing from the spirit and scope thereof.

### Examples 1 to 3 and Comparison Example

Three types of the knitting fabric according to the present invention (Examples 1, 2 and 3, respectively) and a conventional cord fabric (Comparison Example) were prepared as shown in Table 2. A radial tire for cars having a size of 185/70 R 14 employing the above-prepared knitting fabric or the cord fabric for a carcass was made as shown in Fig. 8. With respect to the obtained radial tires, the topping rubber gages, the shrinkage of the fabric, the uniformity and the durability were investigated as follows:

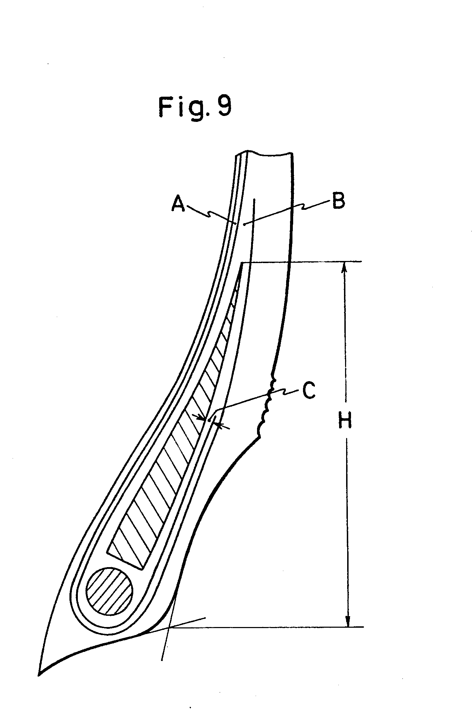

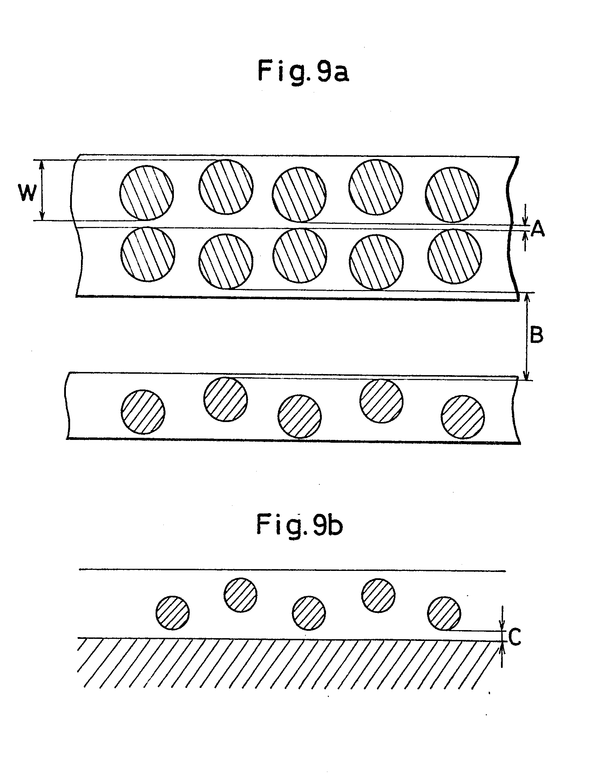

Topping rubber gages: Two kinds of a distance between the cords as shown in Fig. 9 and Fig. 9a (A and B) and a distance from the rubber surface to the cord of the adjacent ply as shown in Fig. 9 and Fig. 9b (C) were measured. In case of a conventional cord fabric, the topping rubber gages are larger as a result of the waving width W of the cord in the ply because of the waving structure.

Shrinkage of the fabric: The shrinkage of the fabric is represented as a following equation:

$$\text{The shrinkage of the fabric } (\%) = \frac{L_0 - L_1}{L_0} \times 100$$

wherein $L_0$ is an original length of the cord and $L_1$ is a length of the cord woven in the fabric.

Uniformity: A tire was constructed with a rim and air was charged in the tire with an internal pressure of 1.9 $kg/cm^2$. The tire was pushed against a drum under a load of 404 kg, and the tire and the drum was rotated. The changes of the stress in a horizontal and vertical direction to the axis were measured and represented in an index. The smaller the index, the better the uniformity.

Durability: A tire was constructed with a rim and air was charged in the tire with an internal pressure of 1.9 $kg/cm^2$. The tire was pushed against a drum under a load of 631 kg, and the tire and the drum were rotated in a speed of 80 km/hr till the tire was damaged. The driving distance was measured and represented in an index. The bigger the index, the better the durability.

The results are summarized in Table 2, wherein the height of the bead apex H is as shown in Fig. 9.

Table 2

| | Example 1 | Example 2 | Example 3 | Reference Example |
|---|---|---|---|---|
| Carcass | | | | |
| Warp (*) fineness........ | 100 d/2 | 100 d/2 | 100 d/2 | 100 d/z |
| material........ | polyester | polyester | polyester | polyester |
| Weft fineness........ | – | OLBOPLAST 29 (**) | OLBOPLAST 29 (**) | OLBOPLAST 29 (**) |
| material........ | – | | | |
| Knitting yarn fineness... | 30 d | 30 d | 30 d | – |
| material... | polyester filament | polyester filament | polyester filament | – |
| Structure (Fig. No.)..... | Fig. 1 | Fig. 4 and Fig. 5 | Fig. 6 | – |
| Shrinkage of the fabric (%).............. | 0.3 | 0 | 0 | 1.1 |
| Belt layer | 1 x 5 x 0.25 steel cord 2 cut ply | 1 x 5 x 0.25 steel cord 2 cut ply | 1 x 5 x 0.25 steel cord 2 cut ply | 1 x 5 x 0.25 steel cord 2 cut ply |
| Bead apex | | | | |
| JIS hardness............ | 93$^\circ$ | 93$^\circ$ | 93$^\circ$ | 93$^\circ$ |
| Hight (H) (mm).......... | 45 | 45 | 45 | 45 |

- continued -

| | Example 1 | Example 2 | Example 3 | Reference Example |
|---|---|---|---|---|
| **Topping rubber** | | | | |
| Dynamic elasticity ($70^{\circ}$C, 2 % strain) (kg/cm$^2$).... | 60 | 60 | 60 | 60 |
| **Topping rubber gage (mm)** | | | | |
| A....................... | 0.20 | 0.22 | 0.22 | 0.16 |
| B....................... | 0.21 | 0.23 | 0.22 | 0.14 |
| C....................... | 0.12 | 0.12 | 0.12 | 0.09 |
| Uniformity | 97 | 95 | 95 | 100 |
| Durability | 154 A few of small loose mess appeared at the bead. | 200 | 200 | 100 Loose mess appeared at at the bead. |

(*) cord embedding density in made-up: 35 warps/5 cm

(**) Commercially available from TOYOBO CO., LTD. made of polyester and cotton

0131954

WHAT WE CLAIM IS:

1. A pneumatic tire containing a knitting fabric as a reinforcement; said knitting fabric is formed by arranging warps pararrel one another and twining a knitting yarn of a fine fiber around the warps to keep each space between the warps constant.

2. A pneumatic tire of Claim 1, wherein the knitting fabric is formed by arranging the warps pararrel one another, setting wefts roughly on the warps to cross the warps at almost right angles without weaving and twining a knitting yarn of a fine fiber around the warps and wefts.

3. A pneumatic tire of Claim 1, wherein the reinforcement is a carcass.

4. A pneumatic tire of Claim 3, wherein the carcass has a radial or bias structure.

5. A pneumatic tire of Claim 1, wherein the reinforcement is a belt layer.

6. A pneumatic tire of Claim 1, wherein the reinforcement is a bead filler.

7. A pneumatic tire of Claim 1, wherein the knitting fabric has a breadth elongation not less than 30 %.

Fig. 1

10

12  11  13  11  11

Fig. 2

20

21

22

23    23    23    23    23

Fig. 3

# Fig. 4

Fig. 5

30

33

32

32

31 31 31 31 31

# Fig. 6

## Fig.7

## Fig. 8

Fig. 9

Fig.9a

Fig.9b